# EUROPEAN PATENT SPECIFICATION

(11) **EP 4 197 813 B1**
(45) Date of publication and mention of the grant of the patent: **12.03.2025**
(21) Application number: 22212333.3
(22) Date of filing: 08.12.2022
(51) Int. Cl.: B60C 9/20, B60C 9/22, B60C 9/28

(54) **TRUCK TIRE**
LASTWAGENREIFEN
PNEU DE CAMION

(30) Priority: 16.12.2021 US 202163265529 P; 11.10.2022 US 202218045509
(43) Date of publication of application: 21.06.2023
(73) Proprietor: The Goodyear Tire & Rubber Company, Akron, OH 44316 (US)
(72) Inventor: PASSANTE SPACCAPIETRA, Ettore, L-9070 Ettelbruck (LU); MULLER, Philippe Joseph Auguste, B-6971 Champlon (BE)
(74) Representative: Kutsch, Bernd

(56) References cited:
- EP-A1- 1 787 825
- EP-A1- 3 838 619
- EP-A1- 3 862 195
- DE-A1- 102016 212 383

## Description

### Field of Invention

The invention relates in general to pneumatic tires, and more particularly for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

DE 10 2016 212 383 A1 describes a tire in accordance with the preamble of claim 1.

Further tires having working belts and a relatively low angle belt positioned between the working belts are described in EP 1 787 825 A1, EP 3 838 619 A1 and EP 3862 195 A1.

### Summary of the Invention

The invention relates to a tire in accordance with claim 1.

Dependent claims refer to preferred embodiments of the invention.

### Definitions

"Aspect Ratio" means the ratio of a tire's section height to its section width.

"Axial" and "axially" mean the lines or directions that are parallel to the axis of rotation of the tire.

"Belt Structure" or "Reinforcing Belts" means at least two annular layers or plies of parallel cords, woven or unwoven, underlying the tread, unanchored to the bead.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions perpendicular to the axial direction.

"Cord" means one of the reinforcement strands, including fibers, which are used to reinforce the plies.

"Extensible" means a cable, cord, wire or reinforcement having an elongation at 10% of the breaking load greater than 0.2%, when measured from a cord extracted from a cured tire.

"Ply" means a cord-reinforced layer of elastomer-coated, radially deployed or otherwise parallel cords.

"Radial" and "radially" mean directions radially toward or away from the axis of rotation of the tire.

### Brief Description of the Drawings

The invention will be described by way of example and with reference to the accompanying drawings in which:
FIG. 1 is a cross-sectional view of a first embodiment of a one half of a tire crown area of the present invention illustrating the belt package; and
FIG. 2 is a schematic of a belt layup trajectory for the zero degree full and folded belt edges.

### Detailed Description of Preferred Embodiments of the Invention

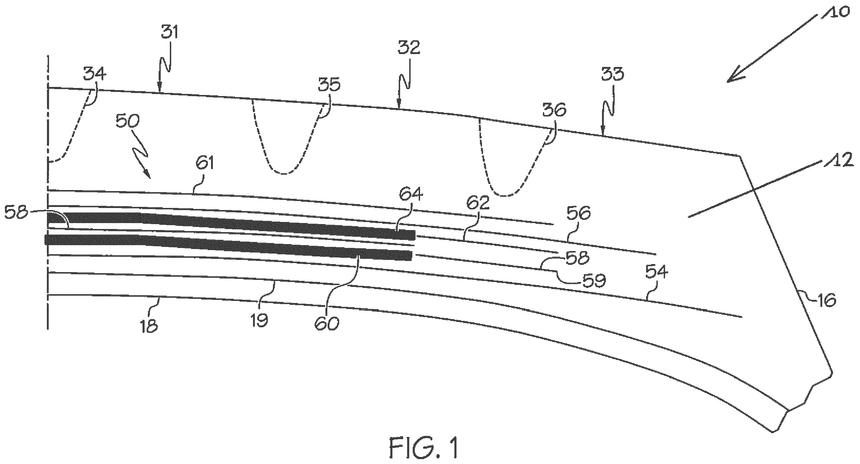

FIG. 1 illustrates a first embodiment of a pneumatic tire, suitable for use as a truck tire. The tire 10 has a tread 12 with a non-skid depth D. The tire tread 12 comprises a plurality of circumferentially continuous ribs, which may vary, but are shown for example as ribs 31, 32 and 33. Positioned between each rib is a circumferential groove 34, 35, 36, which are preferably continuous. The tread may also comprise optional sipes (not shown). The tread pattern is not limited to same, and may comprise, for example, a plurality of blocks and grooves (not shown).

The tire 10 further comprises a casing which includes two opposed sidewalls 16 which extend down from the tread 12 to the bead area (not shown). The casing of the tire may include an inner liner 18 which is typically formed of halobutyl rubber which forms an air impervious barrier. The tire casing may further include one or more radial plies 19 extending from the tread, down the sidewall to the tire bead and wrapped about or otherwise secured to each annular bead.

The tire 10 further includes a belt package 50 which is located between the tread and the one or more casing plies 19. The belt package comprises layers of reinforcement. The casing ply 19 and the belt reinforcing structure 50 are made from cord reinforced elastomeric material, wherein the cords are preferably steel wire or polyamide filaments and the elastomer is preferably rubber.

The belt reinforcing structure 50 includes a first working belt 54 that is the radially innermost belt of the belt package 50. The first working belt 54 is located radially inwards of the second working belt 56 and is preferably the widest belt layer of the belt reinforcing structure 50. The first working belt 54 has an axial width which is preferably equal or, about equal, i.e., ± 5%, to the tread arc width. The breaker angle of belt 54 is between 10 and 50 degrees, preferably with a right orientation, more preferably in the range of 19 to 25 degrees. Belt 54 is preferably made of extensible wire, which has a % elongation at 10% of breaking load of greater than 0.2%. The wire may be a hybrid cord or a steel wire.

The second working belt 56 is the second member of the working belt pair. The second working belt 56 has an axial width less than the axial width of the first working belt 54 and is preferably radially outward of the first working belt 54. Preferably, the second working belt 56 has an axial width less than the width of belt 54 by a step off, which may range from 10 to 20 mm. Belt 56 has a breaker angle between 12 and 35 degrees, preferably with a left orientation, more preferably in the range of 19 to 25 degrees. Belt 56 is preferably made of extensible wire, which is preferably the same as the wire of the first working belt 54. More preferably, the wire has the same construction with the same but opposite angular orientation as the wire of belt 54.

The belt structure 50 further comprises a relatively low angle belt 58 which is preferably located between the working pair belts, 54, 56. The relatively low angle belt 58 has reinforcement cords that are oriented circumferentially at 5 degrees or less, preferably 2 degrees or less, more preferably 0 degrees with the tire midcircumferential plane. The relatively low angle belt 58 has an axial belt width less than the belt width of the working belts 54, 56. The relatively low angle belt 58 is layed over a rubber spacer strip 60. The rubber spacer strip 60 has an axial width less than the axial width of the low angle belt 58. Thus, the central portion of the relatively low angle belt 58 is located radially outward of the lateral ends 59 of the low angle belt.

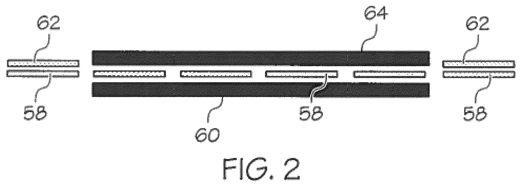

The relatively low angle belt 58 is preferably formed from spirally winding a rubberized strip of one or more cords in a pattern as shown in FIG. 2. Preferably, the strip has 3, 4 or 5 steel cords, and has an axial width in the range of from 5-10 mm, more preferably 4-6 mm. As shown in FIG. 2, a rubberized strip of reinforcement cords is spirally wound from one end of the belt 58 to the other end of the belt over a rubber spacer 60. Next, a first and second narrow belt 62 is applied on each outer lateral end of the relatively low angle belt 58. Each narrow belt 62 has a narrow axial width and are each positioned radially inward of the axially outermost shoulder groove 36. The narrow belt 62 preferably is the narrowest belt and has an axial width in the range of two to four times the axial width of the groove. Preferably, the narrow belt 62 has the same angle and orientation as the relatively low angle belt 58. As best shown in FIG. 1, a rubber spacer 64 is preferably located between the split belts 62, and functions to fill the void between the split belts 62.

The relatively low angle belt 58 has a width sized to avoid compression in the shoulder area. The belt width of the relatively low angle belt 58 is preferably in the range of 70% to 80% of the tread arc width, and even more preferably in the range of 73-77%. The relatively low angle belt 58 is preferably wide enough to decrease the strain cycles in the breaker wedge and is just stopped before the shoulder area to avoid zero degree wire compression and a too round footprint.

The belt structure of the relatively low angle belt 58 is preferably formed of a relatively high tensile steel and preferably has a % elongation at 10% of breaking load of 0.18 or more, such as 0.20 or more, for measurements taken from a cured tire. For measurements taken from bare cords, the % elongation at 10% of breaking load is 0.2 or more. Alternatively, the relatively low angle belt 58 may be formed of non-metal reinforcements such as aramid, carbon fiber, or polyketone or POK.

The belt structure 50 may further comprise an optional top belt 61. The top belt preferably has an axial width less than the working belts 54, 56.

The aspect ratio of the tire described above may vary. The aspect ratio is preferably in a range of from 0.4 to 0.6. The tire preferably has a net to gross ratio in the range of 70 to 90, more preferably in the range of 74 to 86, most preferably a 78 to 84.

## Claims

1. A pneumatic tire for use on trucks, the tire (10) comprising a tread (12) and a belt structure (50) located radially inward of the tread (12), the belt structure (50) including a pair of working belts (54, 56), wherein the working belts (54, 56) are reinforced plies each comprising parallel reinforcement elements, wherein the angle of the reinforcement elements in the respective working belt (54, 56) is in a range of from 12 degrees to 35 degrees with respect to the circumferential direction, wherein the belt structure (50) further includes a relatively low angle belt (58) positioned
between the working belts (54, 56) and comprising parallel reinforcement elements angled at less than 5 degrees with respect to circumferential direction, and wherein a first rubber spacer (60) is at least partially located radially between the relatively low angle belt (58) and the first working belt (56), **characterized in that** the relatively low angle belt (58) has a first and second narrow belt (62) positioned on each outer lateral end (59) of the relatively low angle belt (58), and **in that** the first and second narrow belts
(62) are each positioned radially inward of an axially outermost groove (36) on each side of the tread (12).

2. The tire of claim 1 wherein the first and second narrow belts (62) have parallel
reinforcement elements angled at less than 10 degrees with respect to the circumferential direction.

3. The tire of claim 1 or 2 further comprising a second rubber spacer (64) located axially between the first and second narrow belts (62).

4. The tire of at least one of the previous claims wherein the reinforcement elements in at least one of the working belts (54, 56), the relatively low angle belt (58) or in the first and/or second narrow belt (62) are extensible having an elongation at 10% of the breaking load greater than 0.2% or greater than 0.4% or greater than 0.8% when measured at the reinforcement elements extracted from a cured tire, and, preferably, wherein the extensible reinforcement elements are wires comprising steel or hybrid cords.

5. The tire of at least one of the previous claims wherein the axial width of each of the narrow belts (62) is in the range of from 2.54 cm to 7.62 cm and/or is in the range of from one to two times the maximum axial width of the groove (36) located radially outward of the narrow belt.

6. The tire of at least one of the previous claims wherein the first and second narrow belts
(62) are each positioned radially inward of said axially outermost groove (36) on each side of the tread (12) and extend axially under said respective groove (36), preferably over the full maximum axial width of said respective groove (36).

7. The tire of at least one of the previous claims wherein the axial width of each of the first and second narrow belts
(62) is less than 1/3 of the tread arc width.

8. The tire of at least one of the previous claims wherein the radially inner working belt (54) has an axial width equal to the tread arc width or in a range of from 95% to 105% of the tread arc width.

9. The tire of at least one of the previous claims wherein the radially outer working belt (56) has an axial width less than the radially inner working belt (54) and/or wherein the radially inner working belt (54) is the axially widest belt of the belt structure (50)

10. The tire of at least one of the previous claims wherein the relatively low angle belt (58) has an axial width in the range of from 70 to 80 percent of the tread arc width.

11. The tire of claim 1 further including a transition belt located radially inwards of the working belts (54, 56), the transition belt preferably comprising parallel reinforcement elements making an angle in a range of from 45 to 70 degrees or in a range of from 45 to 70 degrees with respect to the circumferential direction.

12. The tire of claim 11 wherein the transition belt has an axial width in a range of from 60 to 80 percent of the tread arc width.

13. The tire of at least one of the previous claims wherein the aspect ratio of the tire (12) is less than or equal to 0.6.

14. The tire of at least one of the previous claims wherein the axial width of the first rubber spacer (60) is the same than the axial width of the second rubber spacer (64) or is in a range of from 95% to 105% of the axial width of the second rubber spacer (64).

15. The tire of at least one of the previous claims wherein the axial width of the first rubber spacer (60) and/or the axial width of the second rubber spacer (64) is in a range of from 35 to 70 percent, preferably 45 to 60 percent of the tread arc width.

## Patentansprüche

1. Luftreifen zur Verwendung auf Lastkraftwagen, wobei der Reifen (10) eine Lauffläche (12) und eine Gürtelstruktur (50) aufweist, die in der radialen Richtung innerhalb der Lauffläche (12) angebracht ist, wobei die Gürtelstruktur (50) ein Paar von Arbeitsgürteln (54, 56) umfasst; wobei die Arbeitsgürtel (54, 56) verstärkte Lagen darstellen, die jeweils parallele Verstärkungselemente umfassen; wobei der Winkel, den die Verstärkungselemente in dem jeweiligen Arbeitsgürtel (54, 56) bilden, in einem Bereich von 12 Grad bis 35 Grad in Bezug auf die Umfangsrichtung liegt; wobei die Gürtelstruktur (50) ferner einen einen relativ kleinen Winkel bildenden Gürtel (58) umfasst, der zwischen den Arbeitsgürteln (54, 56) angebracht ist und parallele Verstärkungselemente umfasst, die einen Winkel von weniger als 5 Grad in Bezug auf die Umfangsrichtung bilden; und wobei ein erster Kautschuk-Abstandshalter (60) zumindest teilweise in der radialen Richtung zwischen dem einen relativ kleinen Winkel bildenden Gürtel (58) und dem ersten Arbeitsgürtel (56) angebracht ist, **dadurch gekennzeichnet, dass** der einen relativ kleinen Winkel bildende Gürtel (58) einen ersten und einen zweiten schmalen Gürtel (62) aufweist, die an jedem äußeren Seitenende (59) des einen relativ kleinen Winkel bildenden Gürtels (58) angebracht sind, und dass der erste und der zweite schmale Gürtel (62) jeweils in der radialen Richtung innerhalb einer in der axialen Richtung äußersten Rille (36) auf jeder Seite der Lauffläche (12) angebracht sind.

2. Reifen nach Anspruch 1, wobei der erste und der zweite schmale Gürtel (62) parallele Verstärkungselemente aufweisen, die einen Winkel von weniger als 10 Grad in Bezug auf die Umfangsrichtung bilden.

3. Reifen nach Anspruch 1 oder 2, der zusätzlich einen zweiten Kautschuk-Abstandshalter (64) umfasst, der zwischen dem ersten und dem zweiten schmalen Gürtel (62) angebracht ist.

4. Reifen nach mindestens einem der vorhergehenden Ansprüche, wobei die Verstärkungselemente in mindestens einem der Arbeitsgürtel (54, 56), in dem Gürtel, der einen relativ kleinen Winkel bildet (58), oder in dem ersten und/oder zweiten schmalen Gürtel (62) dehnbar sind und bei 10 % der Bruchlast eine Dehnung aufweisen, die größer als 0,2 % oder größer als 0,4 % oder größer als 0,8 % ist, wenn sie anhand von Verstärkungselementen gemessen wird, die aus einem vulkanisierten Reifen extrahiert wurden, und vorzugsweise, wobei die dehnbaren Verstärkungselemente Metalldrähte darstellen, die Stahlcorde oder Hybridcorde umfassen.

5. Reifen nach mindestens einem der vorhergehenden Ansprüche, wobei die axiale Breite jedes der schmalen Gürtel (62) in dem Bereich von 2,54 cm bis 7,62 cm und/oder in dem Bereich liegt, der ein bis zwei Mal die maximale axiale Breite der Rille (36) beträgt, die in der radialen Richtung außerhalb des schmalen Gürtels liegt.

6. Reifen nach mindestens einem der vorhergehenden Ansprüche, wobei der erste und der zweite schmale Gürtel (62) jeweils in der radialen Richtung innerhalb der in der axialen Richtung äußersten Rille (36) auf jeder Seite der Lauffläche (12) angebracht sind und sich in der axialen Richtung unterhalb der jeweiligen Rille (36) erstrecken, vorzugsweise über die gesamte maximale axiale Breite der jeweiligen Rille (36).

7. Reifen nach mindestens einem der vorhergehenden Ansprüche, wobei die axiale Breite von jedem der ersten und zweiten schmalen Gürtel (62) weniger als 1/3 der Bogenbreite der Lauffläche beträgt.

8. Reifen nach mindestens einem der vorhergehenden Ansprüche, wobei der in der radialen Richtung innere Arbeitsgürtel (54) eine axiale Breite aufweist, die gleich der Bogenbreite der Lauffläche ist oder in dem Bereich liegt, der von 95 % bis 105 % der Bogenbreite der Lauffläche ausmacht.

9. Reifen nach mindestens einem der vorhergehenden Ansprüche, wobei der in der radialen Richtung äußere Arbeitsgürtel (56) eine axiale Breite aufweist, die geringer ist als die des in der radialen Richtung inneren Arbeitsgürtels (54) und/oder wobei der in der radialen Richtung innere Arbeitsgürtel (54) den in der axialen Richtung breitesten Gürtel der Gürtelstruktur (50) darstellt.

10. Reifen nach mindestens einem der vorhergehenden Ansprüche, wobei der Gürtel, der einen relativ kleinen Winkel (58) bildet, eine axiale Breite aufweist, die in dem Bereich liegt, der von 70 bis 80 Prozent der Bogenbreite der Lauffläche ausmacht.

11. Reifen nach Anspruch 1, der ferner einen Übergangsgürtel umfasst, der sich in der radialen Richtung innerhalb der Arbeitsgürtel (54, 56) befindet, wobei der Übergangsgürtel vorzugsweise parallele Verstärkungselemente umfasst, die einen Winkel in einem Bereich von 45 bis 70 Grad oder in einem Bereich von 45 bis 70 Grad in Bezug auf die Umfangsrichtung bilden.

12. Reifen nach Anspruch 11, wobei der Übergangsgürtel eine axiale Breite aufweist, die 60 bis 80 Prozent der Bogenbreite der Lauffläche beträgt.

13. Reifen nach mindestens einem der vorhergehenden Ansprüche, wobei das Nennquerschnittsverhältnis des Reifens (12) kleiner oder gleich 0,6 ist.

14. Reifen nach mindestens einem der vorhergehenden Ansprüche, wobei die axiale Breite des ersten Kautschuk-Abstandhalters (60) gleich der axialen Breite des zweiten Kautschuk-Abstandhalters (64) ist oder in dem Bereich liegt, der von 95 % bis 105 % der Bogenbreite der Lauffläche ausmacht.

15. Reifen nach mindestens einem der vorhergehenden Ansprüche, wobei die axiale Breite des ersten Kautschuk-Abstandshalters (60) und/oder die axiale Breite des zweiten Kautschuk-Abstandshalters (64) in einem Bereich liegt, der von 35 bis 70 Prozent, vorzugsweise von 45 bis 60 Prozent, der Bogenbreite der Lauffläche ausmacht.

## Revendications

1. Bandage pneumatique pour son utilisation sur des camions, le bandage (10) comprenant une bande de roulement (12) et une structure de ceintures (50) qui est située, dans la direction radiale, à l'intérieur de la bande de roulement (12), la structure de ceintures (50) englobant une paire de ceintures de travail (54, 56) ; dans lequel les ceintures de travail (54, 56) représentent des nappes renforcées qui comprennent chacune des éléments de renforcement parallèles ; dans lequel l'angle formé par les éléments de renforcement dans la ceinture de travail respective (54, 56) se situe dans une plage allant de 12 degrés à 35 degrés par rapport à la direction circonférentielle ; dans lequel la structure de ceintures (50) englobe en outre une ceinture qui forme un angle relativement petit (58) disposée entre les ceintures de travail (54, 56) et comprend des éléments de renforcement parallèles qui forment un angle inférieur à 5 degrés par rapport à la direction circonférentielle ; et dans lequel une première entretoise en caoutchouc (60) est disposée, au moins de manière partielle, dans la direction radiale, entre la ceinture qui forme un angle relativement petit (58) et la première ceinture de travail (56), **caractérisé en ce que** la ceinture qui forme un angle relativement petit (58) possède une première et une deuxième ceinture étroite (62) qui sont disposées à chaque extrémité latérale externe (59) de la ceinture qui forme un angle relativement petit (58), et **en ce que** la première et la deuxième ceinture étroite (62) sont chacune disposées, dans la direction radiale, à l'intérieur d'une rainure (36) la plus externe dans la direction axiale de chaque côté de la bande de roulement (12).

2. Bandage selon la revendication 1, dans lequel la première et la deuxième ceinture étroite (62) possèdent des éléments de renforcement parallèles qui forment un angle inférieur à 10 degrés par rapport à la direction circonférentielle.

3. Bandage selon la revendication 1 ou 2, qui comprend en outre une deuxième entretoise en caoutchouc (64) qui est disposée entre la première et la deuxième ceinture étroite (62).

4. Bandage selon au moins une des revendications précédentes, dans lequel les éléments de renforcement, dans au moins une des ceintures de travail (54, 56), dans la ceinture qui forme un angle relativement petit (58) ou dans la première et/ou la deuxième ceinture étroite (62), sont extensibles et présentent un allongement, à 10 % de la charge de rupture, qui est supérieur à 0,2 % ou supérieur à 0,4 % ou supérieur à 0,8 %, lorsqu'on le mesure à partir des éléments de renforcement que l'on a extrait à partir d'un bandage vulcanisé, et, de préférence, dans lequel les éléments de renforcement extensibles représentent des fils métalliques comprenant des câblés en acier ou des câblés hybrides.

5. Bandage selon au moins une des revendications précédentes, dans lequel la largeur axiale de chacune des ceintures étroites (62) se situe dans la plage allant de 2,54 cm à 7,62 cm et/ou dans la plage qui représente une à deux fois la largeur axiale maximale de la rainure (36) qui est située, dans la direction radiale, à l'extérieur de la ceinture étroite.

6. Bandage selon au moins une des revendications précédentes, dans lequel la première et deuxième ceintures étroites (62) sont chacune disposées, dans la direction radiale, à l'intérieur de la rainure (36) la plus externe dans la direction axiale, de chaque côté de la bande de roulement (12), et s'étendent, dans la direction axiale, en dessous de ladite rainure respective (36), de préférence, sur la totalité de la largeur axiale maximale de ladite rainure respective (36).

7. Bandage selon au moins une des revendications précédentes, dans lequel la largeur axiale de chacune des première et deuxième ceintures étroites (62) est inférieure à 1/3 de la largeur d'arc de la bande de roulement.

8. Bandage selon au moins une des revendications précédentes, dans lequel la ceinture de travail (54) interne dans la direction radiale possède une largeur axiale qui est égale à la largeur d'arc de la bande de roulement ou qui se situe dans une plage qui représente de 95 % à 105 % de la largeur d'arc de la bande de roulement.

9. Bandage selon au moins une des revendications précédentes, dans lequel la ceinture de travail (56) externe dans la direction radiale possède une largeur axiale qui est inférieure à celle de la ceinture de travail (54) interne dans la direction radiale et/ou dans lequel la ceinture de travail (54) interne dans la direction radiale représente la ceinture la plus large, dans la direction axiale, de la structure de ceintures (50).

10. Bandage selon au moins une des revendications précédentes, dans lequel la ceinture qui forme un angle relativement petit (58) possède une largeur axiale qui se situe dans la plage qui représente de 70 à 80 pour cent de la largeur d'arc de la bande de roulement.

11. Bandage selon la revendication 1, qui englobe en outre une ceinture de transition qui est située, dans la direction radiale, à l'intérieur des ceintures de travail (54, 56), la ceinture de transition comprenant de préférence des éléments de renforcement parallèles qui forment un angle dans une plage allant de 45 à 70 degrés ou dans une plage allant de 45 à 70 degrés par rapport à la direction circonférentielle.

12. Bandage selon la revendication 11, dans lequel la ceinture de transition possède une largeur axiale qui représente de 60 à 80 pour cent de la largeur d'arc de la bande de roulement.

13. Bandage selon au moins une des revendications précédentes, dans lequel le rapport nominal d'aspect du bandage (12) est inférieur ou égal à 0,6.

14. Bandage selon au moins une des revendications précédentes, dans lequel la largeur axiale de la première entretoise en caoutchouc (60) est identique à la largeur axiale de la deuxième entretoise en caoutchouc (64) ou se situe dans une plage qui représente de 95 % à 105 % de la largeur d'arc de la bande de roulement.

15. Bandage selon au moins une des revendications précédentes, dans lequel la largeur axiale de la première entretoise en caoutchouc (60) et/ou la largeur axiale de la deuxième entretoise en caoutchouc (64) se situe(nt) dans une plage qui représente de 35 à 70 pour cent, de préférence de 45 à 60 pour cent de la largeur d'arc de la bande de roulement.
